# EUROPEAN PATENT SPECIFICATION

(11) **EP 3 047 142 B1**
(45) Date of publication and mention of the grant of the patent: **21.06.2017**
(21) Application number: 14786540.6
(22) Date of filing: 16.09.2014
(51) Int. Cl.: F03D 3/06

(54) **VERTICAL AXIS WIND TURBINE ROTOR**
ROTOR EINER WINDTURBINE MIT VERTIKALER ACHSE
ROTOR D'ÉOLIENNE À AXE VERTICAL

(30) Priority: 17.09.2013 IT BS20130041
(43) Date of publication of application: 27.07.2016
(73) Proprietor: Lozzi, Orlando, 25128 Brescia (IT)
(72) Inventor: Lozzi, Orlando, 25128 Brescia (IT)
(74) Representative: Robba, Pierpaolo
(86) International application number: PCT/IB2014/064545
(87) International publication number: WO 2015/040539

(56) References cited:
- WO-A2-2009/029509
- CH-A5- 638 871
- DE-A1-102009 006 711
- JP-A- 2001 065 446
- KR-A- 20120 125 031

## Description

### Technical Sector

The invention relates to a vertical axis wind turbine rotor. More precisely, but not exclusively, the invention relates to a wind turbine rotor belonging to the category of small-size or mini wind turbines, with power outputs of between 10 and 100 kW.

### Prior Art

The most important characteristics of surface areas used for wind power generation are the speed and direction of the wind and the duration and intensity of atmospheric events during the seasons of the year.

In general the number of recorded land sites where it is possible to install large-size wind turbines in optimum conditions, namely such that there is an advantage in economic terms, is relatively small. Some wind turbines, moreover, are sophisticated and costly machines and the number of sites where it is economically convenient to install this type of machine is very limited. Large-size wind turbines, moreover, give rise to problems of environmental impact and therefore cannot be installed in any location.

On the other hand, the installation of small-size wind turbines, owing also to the low production and operating cost, is economically advantageous in a geographically larger area. In particular, the installation of wind turbines, with a power output of between 10 and 100 kW, i.e. turbines belonging to the category of so-called mini wind turbines, allows an economically advantageous production of electric energy in zones where the use of more complex and larger-size turbines is not possible.

One of the problems which must be solved with regard to the design of a wind turbine belonging to the aforementioned class of mini wind turbines is that of causing the turbine to start when the wind speed is low. Experience and the known constructional designs which have been tested hitherto by manufacturers have shown in fact how it is extremely difficult, if not impossible, to start up a wind turbine of this category, both when the wind speed is low and when the wind direction is not optimum.

KR 2012 0125031 on which the preamble of claim 1 is based, discloses a vertical axis turbine rotor having blades made up of three elongated bodies held together by means of parallel plates directly connected to the central rotor shaft. A similar example of vertical axis turbine rotor is disclosed in JP 2001 065446. Another example of vertical axis turbine rotor is disclosed in CH 638 871 which discloses a rotor made up of blades having a flat trailing edge.

The present invention proposes overcoming the drawbacks of the prior art by providing a vertical axis wind turbine rotor which may be installed in a large number of sites with satisfactory results in economic terms.

Another object of the invention is to provide a wind rotor of the aforementioned type, which may be designed with dimensions such that it may be associated with wind turbines with power outputs of between 10 and 100 kW.

A further object of the invention is to provide a wind rotor which may be produced industrially at a low cost and which has low management and maintenance costs.

### Description of the Invention

These and other objects are achieved with a wind rotor as claimed in the attached claims.

In a preferred embodiment of the invention, the wind rotor comprises a plurality of parallel rotor blades. The blades are arranged along the generatrices of a vertical cylinder. The blades are also connected to a central shaft passing along the axis of the cylinder. The connection between the blades and the shaft is performed by means of a radial-arm structure. The rotor is preferably made of metal, for example steel. The shaft of the rotor can be associated, using means known to the person skilled in the art, with a machine for converting the movement into electric energy, for example a dynamo or an alternator. According to the invention, each rotor blade of said plurality of blades comprises three elongated bodies arranged in cascade and having the same wing profile. Said elongated bodies are moreover arranged vertical and parallel to each other and to the central shaft. The elongated bodies are moreover preferably arranged in series with each other and staggered.

Still according to the invention, the wind rotor may be associated with a wind turbine comprising a support structure which is stably fixed to the ground and inside which a machine for converting the movement into electric energy is housed. The wind rotor is associated with the generator by means of the central shaft, which is stably connected to the vertical rotating shaft of the generator. The thrust of the wind causes rotation of the wind rotor and the rotatable shaft of the wind turbine, with the consequent production of energy by means of the machine for converting the movement into electric energy.

Still in accordance with the invention, the rotor comprises preferably from seven to fifteen fixed-pitch rotor blades. Each of said blades in turn comprises three elongated bodies arranged in cascade and having the same wing profile. According to the invention preferably the angular distance between the blades in the wind rotor is substantially equal to their overall transverse width. Advantageously, according to the preferred embodiment of the invention, a cascade effect corresponding to the fluid-dynamic condition which ensures a high energy conversion efficiency, in any direction and with any wind strength, is generated.

The wind rotor according to the invention advantageously envisages a very high elongation ratio of the aerodynamic profile used. In particular, according to the invention, said elongation ratio, which is defined by the ratio between the overall length of the profile of the elongated bodies and the transverse chord of the wing profile of the elongated body is greater than or equal to 30.

The series arrangement of three identical wing profiles staggered at an average distance of between 0.4 and 0.8 times the length of the chord moreover advantageously produces the desired fluid-dynamic effect, known as the cascade effect.

The deviation of the wind flow generates a vortical circulation which advantageously allows the transfer of a significant amount of movement to the rotor blades. The vortical nature of the air which circulates between the three wing profiles which form each rotor blade generates a resultant force tangential to the axis of the wind rotor which causes rotation thereof with a reasonable torque, even in the case of low wind speed values.

As a result of the geometric configuration of the blades and the characteristic design parameters, which are the result of numerous tests carried out systematically for a wide range of speeds and different flow directions, it has been possible to achieve high efficiency values for the wind rotor.

The absence of moving parts and directional mechanisms, as is instead required in the case of blades of conventional rotors with a directable pitch angle, results in the rotor according to the invention being extremely reliable. Moreover, the rotor according to the invention, essentially does not require maintenance, since the flow deviation of the wind is achieved statically.

The advantage derived from the static condition of the blades consists not only in the greater operating simplicity of the wind machine, but also in the significant reduction of industrial manufacturing costs and the greater degree of standardization, thus making this type of wind machine more competitive than the other types of generators.

The wind rotor according to the invention is advantageously capable of being started also at very low wind speeds, for example of the order 1 m/s and therefore is substantially self-starting.

### Short description of the figures

A number of preferred embodiments of the invention will be described below with reference to the accompanying figures in which:
- Fig. 1 is a perspective view of the rotor according to the invention associated with a wind turbine;
- Fig. 2 is a perspective view of a blade of the rotor according to Fig. 1, separate from the rotor;
- Fig. 3 is a view, on a larger scale, of a portion of the blade shown in Fig. 2;
- Fig. 4 is a view, on a larger scale, of a portion of the rotor blade shown in Fig. 3 fixed to the rotor;
- Figs. 5A and 5B are diagrammatic cross-sectional views of a blade and an elongated body of the rotor according to the invention, respectively;
- Fig. 6 is a schematic graph of the average curvature of the profile of the elongated bodies of the rotor according to the invention.

### Description of a number of preferred embodiments of the invention

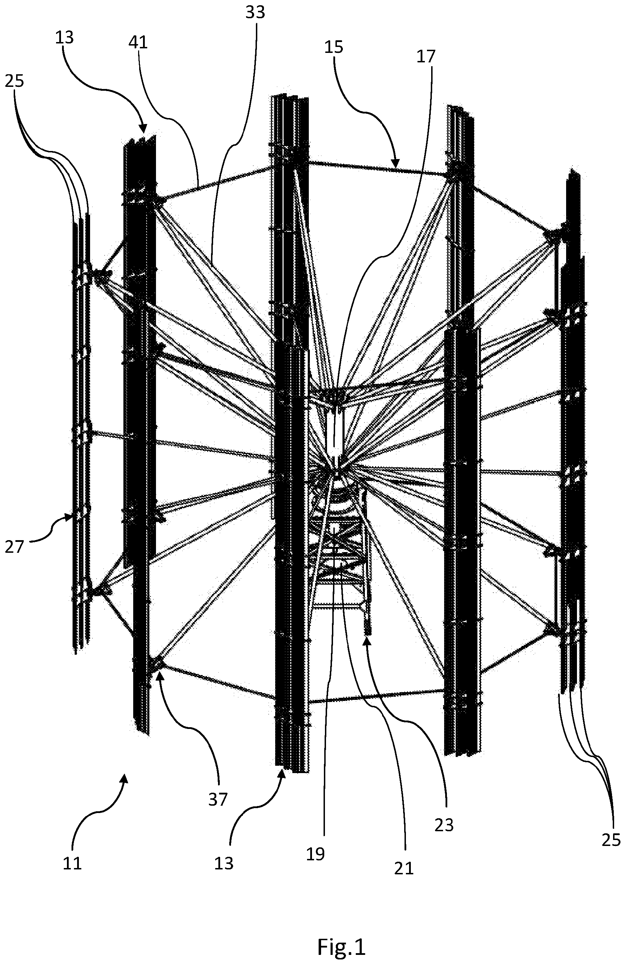

With reference to Fig. 1, this shows the rotor 11 of a vertical axis wind turbine according to a preferred embodiment of the invention. The rotor 11 comprises a plurality of rotor blades 13. The blades 13 are arranged parallel along the generatrices of a vertical cylinder defined by the rotor 11. The blades 13 are connected by means of a radial-arm structure 15 to a central shaft 17 passing along the axis of the cylinder. The central shaft 17 is associated with the rotating shaft 19 of a machine 21 for converting the movement into electric energy. The machine 21 is housed inside a support structure 23 which is able to be stably fixed to the ground. According to the invention each rotor blade 13 of said plurality of blades comprises three elongated bodies 25 arranged in cascade, vertical and parallel to each other and to the central shaft.

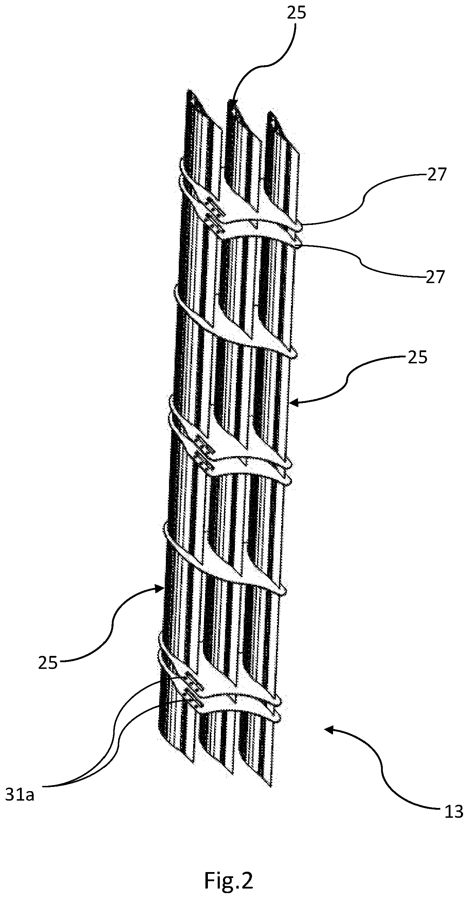

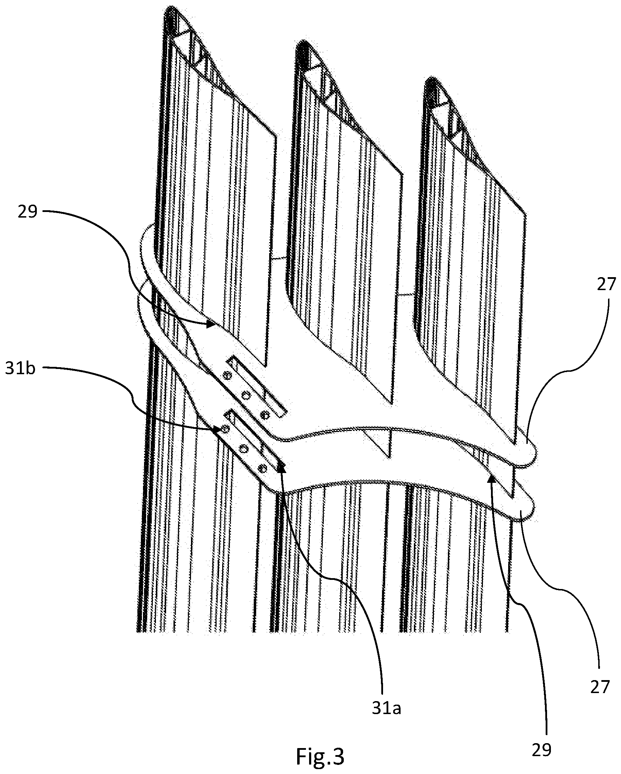

With reference also to Figs. 2 and 3, the elongated bodies 25 are preferably formed as hollow metal profiles. Moreover, according to invention, the elongated bodies 25 have the same wing profile. The three elongated bodies 25 which define each rotor blade 13 are held together by pairs of plates 27. The plates 27 are preferably flat and are arranged transverse to the elongated bodies 25. The plates 27 comprise openings 29 for receiving the elongated bodies 25. Three pairs of parallel and equidistant plates 27 are preferably provided for each blade. Owing to the plates 27 the elongated bodies 25 are kept parallel at the desired distance from each other. Furthermore, the plates 27 allow the blade 13 to be connected to the structure 15 of the rotor 11. The plates 27 are provided with openings 31a and holes 31b for fixing the plates 27 to the radial-arm structure 15.

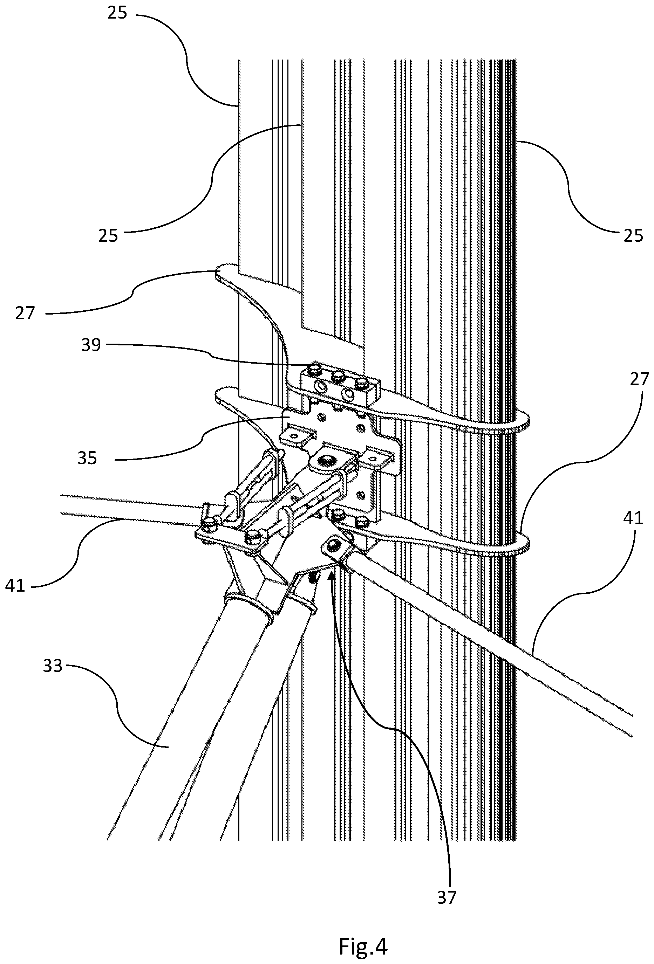

As can be seen more clearly from Fig. 4, the radial-arm structure 15 comprises a plurality of tie-rods 33 which connect the plates 27 to the central shaft 17 of the rotor 11. At least one of these tie-rods is provided for each pair of plates 27, said tie-rod engaging between the two plates 27 with a vertical bracket 35 joined to a coupling piece 37. In the example shown, the tie-rods 33 are two in number per pair of upper plates 27 and one for the other two pairs of plates 27. The vertical bracket 35 is engaged between the plates 27 via the openings 31a. The holes 31b in the plates 27 allow fixing of the vertical bracket 35 by means of bolts 39 passing through said holes 31b. Reinforcing tie-rods 41 connect the coupling piece 37 of one blade 13 to that of the adjacent blade 13 in both the angular directions.

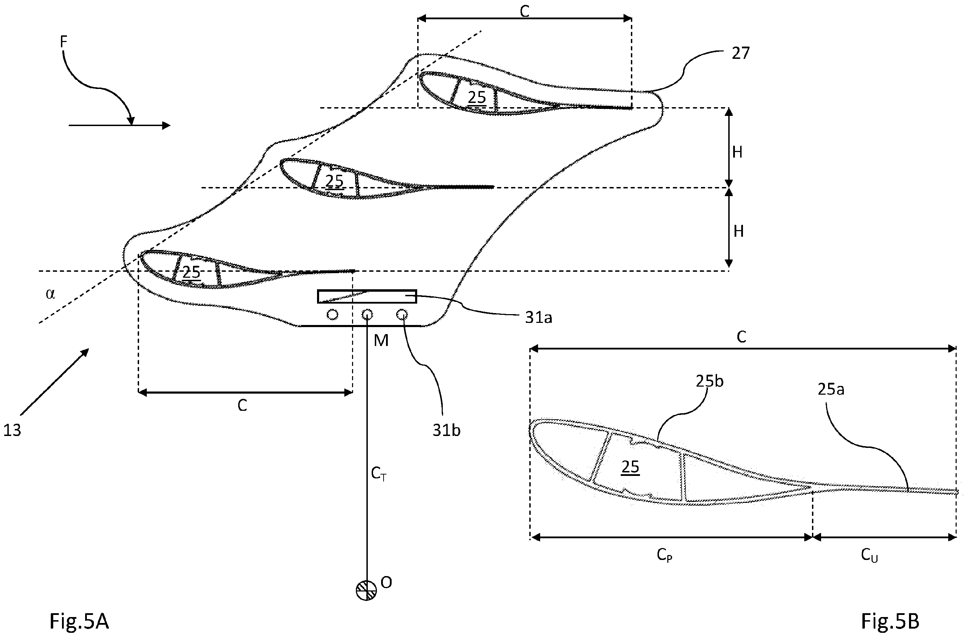

Figs. 5A and 5B show the cross-section of the cascade of wing profiles of the elongated bodies 25 which form the single rotor blade 13. According to the invention the transverse chord C of the wing profile of the elongated body 25 and the pitch H of the cascade are chosen so that the ratio H/C is between 0.2 and 1.2 and preferably equal to 0.4.

Furthermore, still according to the invention, the cascade angle α is preferably between 15° and 60° and even more preferably is chosen close to 30°.

Still according to the invention, the overall blade chord C_{T}, equal to the distance between the centre of rotation O of the shaft 17 and the point M of connection of the blades 13 to the structure 15, the number of blades N_{P} and the diameter D_{R} of the rotor are chosen so that the ratio D_{R} / (N_{P} x C_{T}) is between 0.5 and 1.0. With this configuration advantageously it is possible to obtain a good efficiency of the wind turbine provided with the rotor 11. The best results are obtained, however, for values of said ratio equal to about 0.7.

According to the invention, the trailing edge profile of the elongated body 24 is flat so as to emphasize the cascade effect and minimize the overall wake resistance of the blade 13. This configuration furthermore improves significantly the fluid-dynamic efficiency of the wind rotor 11 according to the invention.

Still with reference to Figs. 5A and 5B, the wing profile of each elongated body 25 is chosen so that the ratio C_{U}/C_{P} between the length C_{U} of the thin part 25a and the length C_{P} of the profiled part 25b of the wing profile of the elongated body 25 is between 0.1 and 0.5 and preferably equal to about 0.4.

The ratio λ = V_{P}/V between the peripheral speed V_{P} of the blades (V_{P} = C_{T} x Ω, where Ω is the angular velocity of the rotor) and that V of the wind in the direction of the arrow F, which ensures optimum performances and the greatest power of the rotating shaft, is obtained for λ ranging between 0.7 and 1.1. This value is also a function of the instantaneous turbulence index of the wind.

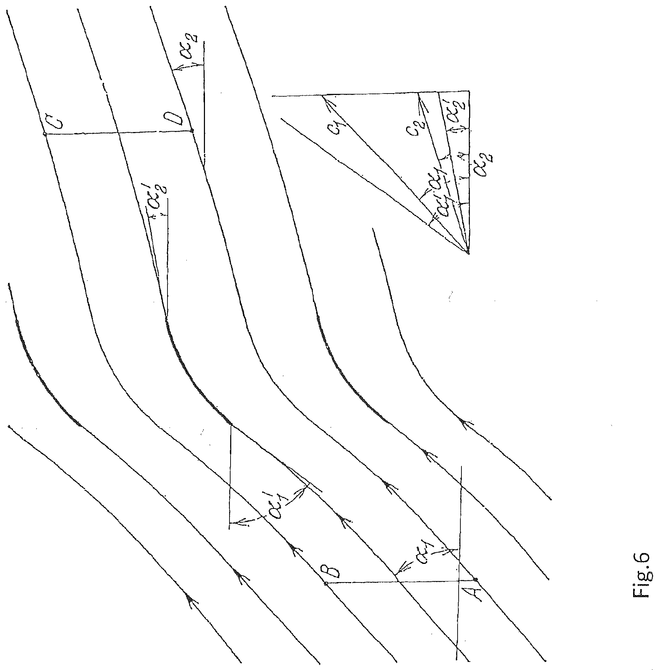

With reference to Fig. 6, still according to the invention, the average curvature of the wing profile of the elongated bodies is considerable and determines the geometric thin-blade condition with a high directional variation between the entry angle of the flow α1 and the exit angle α2.

The wind rotor as described and illustrated may be subject to numerous variations and modifications which fall within the same inventive principle.

## Claims

1. Vertical axis wind turbine rotor (11) comprising a plurality of parallel rotor blades (13) arranged along the generatrices of a vertical cylinder and connected by means of a radial-arm structure (15) to a central shaft (17) passing along the axis of the cylinder, said shaft (17) being able to be associated with a machine (21) for converting the movement into electric energy, whereby each rotor blade (13) of said plurality of blades comprises three elongated bodies (25) arranged in cascade and having the same wing profile, said elongated bodies being arranged vertical and parallel to each other and to the central shaft (17), wherein the three elongated bodies (25) which define each rotor blade (13) are held together by pairs of parallel plates (27) arranged transverse with respect to the elongated bodies (25), **characterized in that** the radial-arm structure (15) comprises a plurality of tie-rods (33) which connect the plates (27) to the central shaft (17) of the rotor (11), at least one tie-rod (33) being provided for each pair of plates (27), said tie-rod engaging between the two plates (27) with a vertical bracket (35) joined to a coupling piece (37) and engaged between the plates (27) via second openings (31a), said plates being provided with holes (31b) for fixing the vertical bracket (35) by means of bolts (39).

2. Rotor according to claim 1, wherein reinforcing tie-rods (41) connect the coupling piece (37) of one blade (13) to that of the adjacent blade (13) in both the angular directions.

3. Rotor according to claim 1 or 2, wherein three pairs of parallel and equidistant plates (27) are provided for each blade.

4. Rotor according to Claim 1 or 2 or 3, wherein the elongation ratio (R_{A}) between the overall blade chord (C_{T}) and the transverse chord (C) of the wing profile of said elongated body (25) is greater than 20.

5. Rotor according to Claim 4, wherein the elongation ratio (R_{A}) between the overall blade chord (C_{T}) and the transverse chord (C) of the wing profile of said elongated body (25) is greater than 30.

6. Rotor according to any of the preceding claims, wherein the ratio between the chord (C) of the wing profile of the elongated body (25) and the pitch (H) of the cascade is between 0.2 and 1.2.

7. Rotor according to Claim 6, wherein the ratio between the chord (C) of the wing profile of the elongated body (25) and the pitch (H) of the cascade is equal to 0.4.

8. Rotor according to any one of the preceding claims, wherein the angle α of the cascade is between 15° and 60°.

9. Rotor according to Claim 8, wherein the angle α of the cascade is equal to 30°.

10. Rotor according to any one of the preceding claims, wherein the ratio between the diameter (Dᵣ) of the rotor and the overall blade chord (C_{T}) of the cascade multiplied by the number (N_{P}) of rotor blades is between 0.5 and 0.7.

11. Rotor according to any one of the preceding claims, wherein the wing profile of each elongated body (25) comprises a flat trailing edge and wherein the ratio between the length (C_{U}) of the thin part (25a) of the wing profile of the elongated body (25) and the length (C_{P}) of the profiled part (25b) of the wing profile of the elongated body (25) is between 0.1 and 0.5.

12. Rotor according to Claim 11, wherein the ratio between the length (C_{U}) of the thin part (25a) of the wing profile of the elongated body (25) and the length (C_{P}) of the profiled part (25b) of the wing profile of the elongated body (25) is equal to 0.4.

13. Wind turbine comprising:
- a support structure (15) which is able to be stably fixed to the ground;
- a machine (21) for converting the movement into electric current, said machine being housed inside said fixed structure (15);
- a vertical rotating shaft (19) supported rotatably by the support structure (15) and connected to the machine (21) so that rotation of the rotating shaft causes the generation of electric current by said machine;
- a wind rotor (11) able to cause rotation of the rotating shaft (19) under the thrust of the wind, **characterized in that** said wind rotor (11) is according to any one of Claims 1 to 12.

## Patentansprüche

1. Rotor einer Windturbine mit vertikaler Achse und mehreren parallelen Rotorblättern (13), die entlang der Mantellinien eines vertikalen Zylinders angeordnet und mittels einer radialen Armstruktur (15) an eine zentrale Welle (17) angeschlossen sind, die entlang der Zylinderachse verläuft, wobei die Welle (17) dazu geeignet ist, an eine Maschine (21) zum Umwandeln der Bewegung in elektrische Energie angeschlossen zu werden, wobei jedes Rotorblatt (13) drei längliche Körper (25) aufweist, die in einer Kaskade angeordnet sind und dasselbe Flügelprofil haben, wobei die länglichen Körper vertikal und parallel zueinander und zu der zentralen Welle (17) angeordnet sind, wobei die drei länglichen Körper (25), die jeweils ein Rotorblatt (13) definieren, und durch Paare von parallelen Platten (27) zusammengehalten werden, die in Bezug auf die länglichen Körper (25) senkrecht angeordnet sind, **dadurch gekennzeichnet, dass** die radiale Armstruktur (15) mehrere Verbindungsstangen (33) aufweist, welche die Platten (27) mit der zentralen Welle (17) des Rotors (11) verbinden, wobei wenigstens eine Verbindungsstange (33) für jedes Paar von Platten (27) vorhanden ist, wobei die Verbindungsstange, die zwischen den beiden Platten (27) eingesetzt ist, mit einer vertikalen Halterung (35) verbunden ist, die an einem Verbindungsstück (37) angebracht ist und zwischen den Platten (27) über zweite Öffnungen (31 a) eingesetzt ist, wobei die Platten mit Öffnungen (31 b) zum Befestigen der vertikalen Halterung (35) mittels Stiften (39) versehen sind.

2. Rotor nach Anspruch 1, wobei verstärkende Verbindungsstangen (41) das Verbindungsstück (37) eines Blatt (13) in beiden Winkelrichtungen mit dem eines benachbarten Blatts (13) verbinden.

3. Rotor nach Anspruch 1 oder 2, wobei für jedes Blatt drei Paare von parallelen Platten (27) in gleichem Abstand vorgesehen sind.

4. Rotor nach Anspruch 1 oder 2 oder 3, wobei das Verlängerungsverhältnis (R_{A}) zwischen der Gesamttiefe des Blattprofils (C_{T}) und dem der Querprofiltiefe (C) des Flügelprofils des länglichen Körpers (25) mehr als 20 beträgt.

5. Rotor nach Anspruch 4, wobei das Verlängerungsverhältnis (R_{A}) zwischen der Gesamttiefe des Blattprofils (C_{T}) und der Querprofiltiefe (C) des Flügelprofils des länglichen Körpers (25) mehr als 30 beträgt.

6. Rotor nach einem der vorstehenden Ansprüche, wobei das Verhältnis zwischen der Profiltiefe (C) des Flügelprofils des länglichen Körpers (25) und der Steigung (H) der Kaskade zwischen 0,2 und 1,2 beträgt.

7. Rotor nach Anspruch 6, wobei das Verhältnis zwischen der Profiltiefe (C) des Flügelprofils des länglichen Körpers (25) und der Steigung (H) der Kaskade 0,4 beträgt.

8. Rotor nach einem der vorstehenden Ansprüche, wobei der Winkel α der Kaskade zwischen 15° und 60° beträgt.

9. Rotor nach Anspruch 8, wobei der Winkel α der Kaskade 30° beträgt.

10. Rotor nach einem der vorstehenden Ansprüche, wobei das Verhältnis zwischen dem Durchmesser (Dᵣ) des Rotors und der Gesamttiefe des Blattprofils (C_{T}) der Kaskade multipliziert mit der Anzahl (N_{P}) der Rotorblätter zwischen 0,5 und 0,7 beträgt.

11. Rotor nach einem der vorstehenden Ansprüche, wobei das Flügelprofil von jedem länglichen Körper (25) eine flache hintere Kante aufweist und wobei das Verhältnis zwischen der Länge (C_{U}) des dünnen Teils (25a) des Flügelprofils des länglichen Körpers (25) und der Länge (C_{P}) des Profilteils (25b) des Flügelprofils des länglichen Körpers (25) zwischen 0,1 und 0,5 beträgt.

12. Rotor nach Anspruch 11, wobei das Verhältnis zwischen der Länge (C_{U}) des dünnen Teils (25a) des Flügelprofils des länglichen Körpers (25) und der Länge (C_{P}) des Profilteils (25b) des Flügelprofils des länglichen Körpers (25) 0,4 beträgt.

13. Windturbine mit:
- einer Trägerstruktur (15), die dazu geeignet ist, stabil am Boden befestigt zu werden,
- eine Maschine (21) zum Umwandeln der Bewegung in elektrischen Strom, wobei die Maschine in der befestigten Struktur (15) angeordnet ist,
- eine vertikale rotierende Welle (19), die drehbar von der Trägerstruktur (15) gestützt und an die Maschine (21) angeschlossen ist, sodass Rotation der Welle bewirkt, dass die Maschine elektrischen Strom erzeugt,
- einem Windrotor (11) der dazu in der Lage ist, unter Einwirkung von Wind eine Rotation der Welle (19) zu bewirken, **dadurch gekennzeichnet, dass** der Windrotor (11) nach einem der Ansprüche 1 bis 12 ausgebildet ist.

## Revendications

1. Rotor d'éolienne à axe vertical (11) comprenant une pluralité de pales de rotor parallèles (13) agencées le long des génératrices d'un cylindre vertical et raccordées au moyen d'une structure de bras radial (15) à un arbre central (17) passant le long de l'axe du cylindre, ledit arbre (17) étant capable d'être associé à une machine (21) pour convertir le mouvement en énergie électrique, moyennant quoi chaque pale de rotor (13) de ladite pluralité de pales comprend trois corps allongés (25) agencés en cascade et ayant le même profil d'aile, lesdits corps allongés étant agencés verticaux et parallèles les uns aux autres et à l'arbre central (17), dans lequel les trois corps allongés (25) qui définissent chaque pale de rotor (13) sont maintenus ensemble par des paires de plaques (27) parallèles agencées transversales par rapport aux corps allongés (25), **caractérisé en ce que** la structure de bras radial (15) comprend une pluralité de barres de liaison (33) qui raccordent les plaques (27) à l'arbre central (17) du rotor (11), au moins une barre de liaison (33) étant prévue pour chaque paire de plaques (27), ladite barre de liaison s'enclenchant entre les deux plaques (27) avec un support vertical (35) assemblé à une pièce d'accouplement (37) et enclenché entre les plaques (27) via des secondes ouvertures (31a), lesdites plaques étant pourvues de trous (31b) pour fixer le support vertical (35) au moyen de boulons (39).

2. Rotor selon la revendication 1, dans lequel des barres de liaison de renforcement (41) raccordent la pièce d'accouplement (37) d'une pale (13) à celle de la pale (13) adjacente dans les deux directions angulaires.

3. Rotor selon la revendication 1 ou 2, dans lequel trois paires de plaques (27) parallèles et équidistantes sont prévues pour chaque pale.

4. Rotor selon la revendication 1 ou 2 ou 3, dans lequel le rapport d'allongement (R_{A}) entre la corde de pale globale (C_{T}) et la corde transversale (C) du profil d'aile dudit corps allongé (25) est supérieur à 20.

5. Rotor selon la revendication 4, dans lequel le rapport d'allongement (R_{A}) entre la corde de pale globale (C_{T}) et la corde transversale (C) du profil d'aile dudit corps allongé (25) est supérieur à 30.

6. Rotor selon l'une quelconque des revendications précédentes, dans lequel le rapport entre la corde (C) du profil d'aile du corps allongé (25) et le pas (H) de la cascade est entre 0,2 et 1,2.

7. Rotor selon la revendication 6, dans lequel le rapport entre la corde (C) du profil d'aile du corps allongé (25) et le pas (H) de la cascade est égal à 0,4.

8. Rotor selon l'une quelconque des revendications précédentes, dans lequel l'angle α de la cascade est entre 15° et 60°.

9. Rotor selon la revendication 8, dans lequel l'angle α de la cascade est égal à 30°.

10. Rotor selon l'une quelconque des revendications précédentes, dans lequel le rapport entre le diamètre (Dᵣ) du rotor et la corde de pale globale (C_{T}) de la cascade multiplié par le nombre (N_{P}) de pales de rotor est entre 0,5 et 0, 7.

11. Rotor selon l'une quelconque des revendications précédentes, dans lequel le profil d'aile de chaque corps allongé (25) comprend un bord de fuite plat et dans lequel le rapport entre la longueur (C_{U}) de la partie mince (25a) du profil d'aile du corps allongé (25) et la longueur (C_{P}) de la partie profilée (25b) du profil d'aile du corps allongé (25) est entre 0,1 et 0,5.

12. Rotor selon la revendication 11, dans lequel le rapport entre la longueur (C_{U}) de la partie mince (25a) du profil d'aile du corps allongé (25) et la longueur (C_{P}) de la partie profilée (25b) du profil d'aile du corps allongé (25) est égal à 0,4.

13. Eolienne comprenant :
- une structure de soutien (15) qui est capable d'être fixée de façon stable au sol ;
- une machine (21) pour convertir le mouvement en courant électrique, ladite machine étant logée à l'intérieur de ladite structure fixée (15) ;
- un arbre tournant vertical (19) soutenu en rotation par la structure de soutien (15) et raccordé à la machine (21) de sorte qu'une rotation de l'arbre tournant provoque la génération de courant électrique par ladite machine ;
- un rotor éolien (11) capable de provoquer une rotation de l'arbre tournant (19) sous la poussée du vent, **caractérisée en ce que** ledit rotor éolien (11) est selon l'une quelconque des revendications 1 à 12.
